# EUROPEAN PATENT SPECIFICATION

(11) **EP 4 246 798 B1**
(45) Date of publication and mention of the grant of the patent: **11.11.2026**
(21) Application number: 23159921.8
(22) Date of filing: 03.03.2023
(51) Int. Cl.: H02P 5/74, H02P 25/026, H02P 29/50, B60L 1/00, B60L 50/75

(54) **CONTROL SYSTEM**
STEUERSYSTEM
SYSTÈME DE COMMANDE

(30) Priority: 14.03.2022 GB 202203515
(43) Date of publication of application: 20.09.2023
(73) Proprietor: J.C. Bamford Excavators Limited, Uttoxeter Staffordshire ST14 5JP (GB)
(72) Inventor: HARPER, Lee, Uttoxeter, ST14 5JP (GB)
(74) Representative: Foot, Paul Matthew James

(56) References cited:
- US-A- 5 692 054
- US-A1- 2006 018 764
- US-A1- 2016 083 073
- US-A1- 2019 185 149

## Description

### FIELD

The present disclosure relates to a control system for an electric off-highway vehicle.

### BACKGROUND

Electrically powered vehicles typically comprise multiple systems (such as hydraulic or cooling systems) which can be notoriously noisy during operation. Unlike in traditional diesel or petrol-powered vehicles, in electrically powered vehicles the noise created by such systems is not masked by the noise generated from the combustion engine. As such, a challenge is presented to reduce the noise generated by electrically powered vehicles. The present disclosure seeks to overcome, or at least mitigate, this problem.

An example of a known method of vehicle noise control is described in US 2016/0083073 It discloses an automated aerial vehicle (AAV) e.g. quad-copter in implementing noise cancellation, having second propeller generates anti-noise sound waves that are in anti-phase with noise sound waves have same amplitude as noise sound waves.

The patent document US2019185149A1 discloses a vehicle having multiple rotor units (315) mounted to an unmanned aerial vehicle (UAV) body. Each of the rotor units is provided with a bladed rotor (320) that rotates to generate thrust. A control system (300) is coupled to each of the rotor units to control rotation of the bladed rotor of each of the rotor units, where the control system is provided with a controller logic executed by a controller (305) for adjusting one of rotation rate or phase delay of the rotor units relative to another rotor units that causes spread of noises generated by the rotor units.

Patent document US5692054A discloses a multiple source self noise cancellation. In more details, it discloses a repetitive noise cancellation system for multiple noise sources employing a controller (36) which senses radiated noise by reference sensors (35) and the status of the noise sources by position sensors (37, 38) and automatically controls one of the noise sources so that the noises being emitted from the multiple sources cancel one another.

### SUMMARY

The invention is defined in the independent apparatus claim 1 and the preferred embodiments in the dependent claims.

According to a first aspect of the present disclosure, there is provided an electric off-highway vehicle comprising:
a power supply;
a hydraulic system and/or a traction system;
a first component associated with a first rotor which is associated with a first noise waveform when in use, wherein said hydraulic system and/or said traction system comprises the first component;
a second component associated with a second rotor which is associated with a second noise waveform when in use, wherein said hydraulic system and/or said traction system comprises the second component;
a plurality of electric motors, each configured to actuate a respective one of the rotors; and
a plurality of inverters each being configured to regulate the flow of electrical power from the power supply to a respective one of the electric motors,
wherein the electric off-highway vehicle is associated with a resultant noise waveform comprising the first and second noise waveforms, when in use, and
wherein the electric off-highway vehicle further comprises a control system, and
wherein the control system is configured to control the plurality of inventers to control an angular position of the first and/or second rotors so as to maintain a desired phase offset between the noise waveforms associated with the respective rotors.

Advantageously, offsetting the phases of the waveforms associated with the respective rotors results in a cancellation effect due to destructive superposition which helps to optimise the noise performance of the electric off-highway vehicle.

In some embodiments, the electric off-highway vehicle comprises N number of components, wherein N is 2 or more, wherein each component is associated with a respective rotor and wherein each rotor is associated with a respective noise waveform when in use, and wherein the control system is configured to control the plurality of inverters to control the angular positions of the respective rotors such that the noise waveforms associated with the rotors of the N components are approximately $\frac{360}{N}$ degrees out of phase.

The term "N" is used herein to denote the number of components of a given electric vehicle.

Advantageously, optimal noise cancelling performance can be achieved in electric off-highway vehicles using multi-rotor systems when the noise waveforms generated by the rotors are 360/N degrees out of phase.

In some embodiments, the control system is configured to:
a) determine an angular position of each rotor;
b) determine an offset between the angular positions of the rotors; and
c) control at least one of the inverters to control the angular position of at least one of the rotors based on the determined offset.

In some embodiments, the control system is configured to carry out the process defined by steps a) to c) repeatedly at regular intervals.

In some embodiments, the control system is configured to control at least one of the inverters to control the angular position of at least one of the rotors when the determined offset differs from a target offset value by at least a predetermined amount.

Advantageously, offsetting the phases of the waveforms associated with the respective rotors results in a cancellation effect due to destructive superposition which helps to optimise the noise performance of the electric off-highway vehicle. In some embodiments, the target offset value is $\frac{360}{N}$ degrees.

Advantageously, optimal noise cancelling performance can be achieved in electric off-highway vehicles using multi-rotor systems when the noise waveforms generated by the rotors are 360/N degrees out of phase.

In some embodiments, the control system is configured to:
a) obtain a resultant noise waveform of the electric off-highway vehicle at a time tₙ; and
b) control at least one of the inverters to control the angular position of at least one of the rotors.

In some embodiments, the control system is further configured to:
c) after step b), obtain an updated resultant noise waveform of the electric off-highway vehicle at a time tₙ₊₁;
d) compare the resultant noise waveform at time tₙ to the resultant noise waveform at time tₙ₊₁; and
e) control at least one of the inverters to control the angular position of at least one of the rotors based on the comparison carried out during step d).

Advantageously, this feature enables the noise generated by the electric off-highway vehicle to be reduced without needing to know the exact positions of the rotor. Furthermore, in systems where the position of the rotors is measured, this can help to further improve the effectiveness of the system.

In some embodiments, the control system is configured to control at least one of the inverters to control the relative angular position of at least one of the rotors when the parameter of the resultant noise waveform differs from a desired target value by at least a predetermined amount.

In some embodiments, the electric off-highway vehicle comprises N number of components, wherein N is greater than 2, and wherein each component is associated with a respective rotor which is associated with a respective noise waveform when in use, and wherein the resultant noise waveform comprises each of the respective noise waveforms.

In some embodiments, the electric off-highway vehicle further comprises at least one position sensor configured to measure the angular position of each rotor. It will be appreciated that any suitable angular or position sensor/encoder may be used.

In some embodiments, the control system is configured to determine the angular position of each rotor based on the measurements provided by the at least one position sensor.

In some embodiments, the at least one position sensor is a motor position sensor configured to determine the position of the one or more rotors based on the position of the corresponding electric motor.

Advantageously, this feature avoids the need for placing sensors about the rotors (also known as "sensorless" operation)

In some embodiments, the electric off-highway vehicle further comprises a transducer (e.g., a microphone) configured to measure a vibration signature of the electric off-highway vehicle.

In some embodiments, the control system is configured to obtain the resultant noise waveform for the electric off-highway vehicle based on the vibration signature obtained by the transducer.

Advantageously, this feature enables the noise generated by the electric off-highway vehicle to be deduced without needing to know the exact positions of the rotors.

### BRIEF DESCRIPTION OF THE DRAWINGS

The present disclosure will now be described, by way of example only, with reference to the following figures in which:
Figure 1 is a schematic illustration of an embodiment of an electric working vehicle disclosed herein;
Figure 2 is a schematic illustration of a control system as disclosed herein, along with various components of the electric working vehicle illustrated in Figure 1;
Figure 3 is a flow diagram illustrating the basic principles of operation of the control system illustrated in Figure 2;
Figure 4 is a flow diagram illustrating the operation of the control system illustrated in Figures 2 and 3; and
Figure 5 is a flow diagram illustrating the operation of a control system according to another embodiment of the present disclosure.

### DETAILED DESCRIPTION

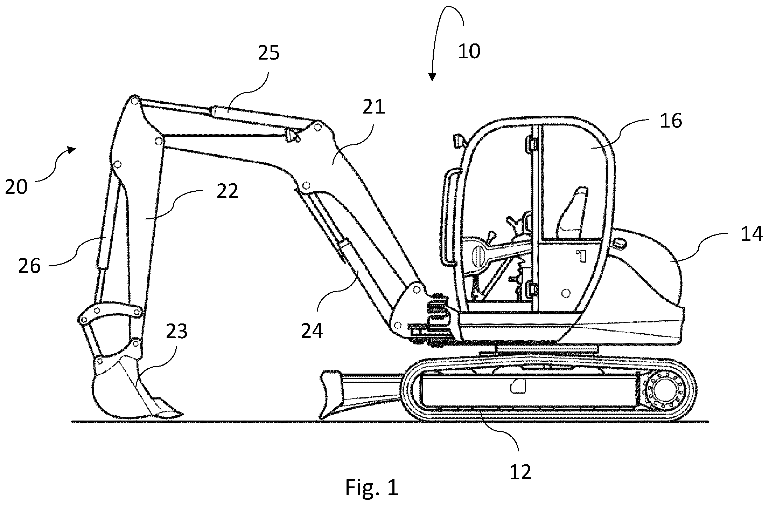

Referring to Figure 1, an electric vehicle according to an embodiment of the present disclosure is indicated at 10.

In the embodiment illustrated in Figure 1, the electric vehicle is an electric working vehicle. However, it shall be appreciated that in other embodiments, the electric vehicle may be of any suitable kind including, but not limited to, a car, a motorcycle, a utility vehicle, a van, a light truck, a heavy goods vehicle, a recreational vehicle, an all-terrain vehicle etc.

A working vehicle is an off-highway vehicle, for example those used in construction industries (e.g., backhoe loaders, excavators, slew excavators, telescopic handlers, forklifts, skid-steer loaders, dump trucks, bulldozers, graders), agricultural industries (e.g., tractors, combine harvesters, self-propelled harvesters, and sprayers), quarrying (e.g., loading shovels, aggregate crushing equipment), and forestry (e.g., timber harvesters, feller bunchers).

In the illustrated embodiment, the working vehicle 10 is a crawler excavator having a chassis 14 and a ground engaging transport means in the form of a pair of tracks 12 provided on the chassis 14 to move the vehicle 10 over the ground. However, in alternative embodiments, other ground engaging means can be provided, for example wheels may be provided to move the working vehicle 10, instead of tracks 12.

An arm assembly is coupled to the chassis 14 and includes a working arm 20 which is pivotally coupled to the chassis 14.

The working vehicle 10 also includes a cab 16 with a collection of controls (not shown) for moving the working arm 20, manoeuvring the working vehicle 10 and/or controlling other functions of the working vehicle 10.

The working arm 20 includes a boom 21 pivotally attached to the front of the chassis 14. The working arm 20 also includes a dipper arm 22 pivotally attached to the boom and an implement 23 pivotally attached to the dipper arm 22 (i.e., connected to a free end of the working arm 20). In some embodiments, the implement may be a bucket, which is used for soil-shifting or materials handling operations (e.g., trenching, grading, and loading) and/or materials handling (e.g., depositing aggregate in trenches, lifting materials, and placing them on an elevated platform).

In alternative embodiments, an alternative implement may be used, such as a hydraulic hammer drill. A hydraulic hammer drill includes a drill bit configured for reciprocating movement under the action of pressurized hydraulic fluid (e.g., hydraulic fluid supplied via an auxiliary hose of a hydraulic system of the working vehicle 10). Such a hydraulic hammer drill is typically used for breaking apart materials (e.g., a concrete/tarmac road surface).

Furthermore, in some embodiments, the working arm may be a triple-articulated boom (or TAB boom) comprising a boom and a plurality of dipper arm sections pivotally attached between the boom and the implement. Advantageously, the use of a TAB boom can help to improve the flexibility and versatility of the working arm.

A boom actuator 24 is provided to move the boom in an ascending direction and a descending direction. The boom actuator is provided in the form of a boom actuator body defining a bore, a piston configured for reciprocating movement within the bore, and a rod connected to the piston and extending through the boom actuator body. The working vehicle 10 also includes a dipper actuator 25 similar to the boom actuator 24, for pivoting the dipper arm 22 with respect to the boom 21, and an implement actuator 26 similar to the boom actuator 24, for pivoting the implement 23 with respect to the dipper arm 22. The working vehicle 10 also includes a hydraulic system (not shown) for controlling the boom actuator, dipper actuator, bucket actuator and other hydraulic functions of the working vehicle 10.

In the illustrated embodiment, the electric working vehicle is a hydrogen-powered working vehicle. The chassis 14 of the electric vehicle 10 houses a hydrogen fuel cell (not shown) comprising an anode (not shown) and a cathode (not shown). During use, hydrogen fuel from a hydrogen storage unit (not shown) is supplied to the anode of the hydrogen fuel cell and air (or another suitable substance) is supplied to the cathode via a suitable intake (not shown). The flow of electricity generated by the fuel cell can be subsequently used to power various components of the working vehicle 10 and/or can be passed to an energy storage device (such as a battery) via a suitable conduit (not shown) to be used to power components of the working vehicle at a later date.

The means by which a hydrogen fuel cell generates electricity is well known in the art and is not central to the concept of the present disclosure. As such, for conciseness, the operation of the hydrogen fuel cell will not be discussed in detail. Furthermore, in other embodiments, it shall be appreciated that other kinds of electric vehicle may be used, such as battery powered vehicles, and so the present disclosure is not solely limited to hydrogen-powered vehicles.

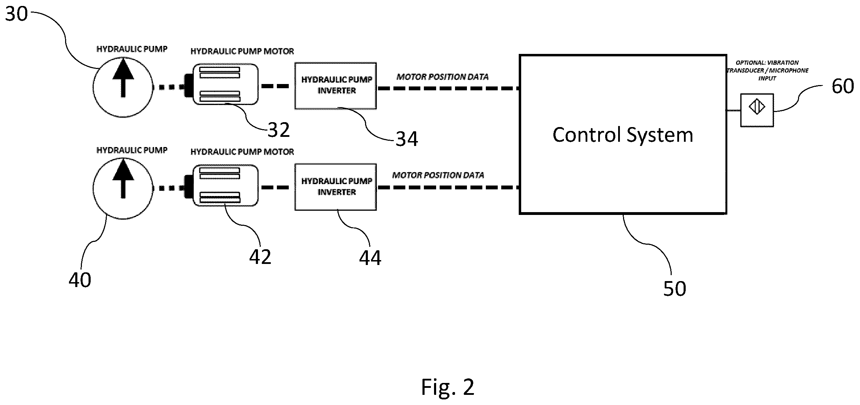

Referring now to Figure 2, the electric vehicle 10 comprises two components 30, 40 for performing one or more functions during use.

In the illustrated embodiment, the first 30 and second 40 components are hydraulic pumps configured to actuate one or more hydraulic systems present on the vehicle 10. However, it shall be appreciated that in other embodiments, the first and/or second components may be another suitable component such as another component of the vehicle's hydraulic system, a component of the vehicle's traction system (e.g. a traction motor); a component of the vehicles cooling system (e.g. a cooling fan) or a combination thereof. Furthermore, whilst the electric vehicle illustrated in Figure 2 comprises two components, in other embodiments, the number of components (N) may be greater than two.

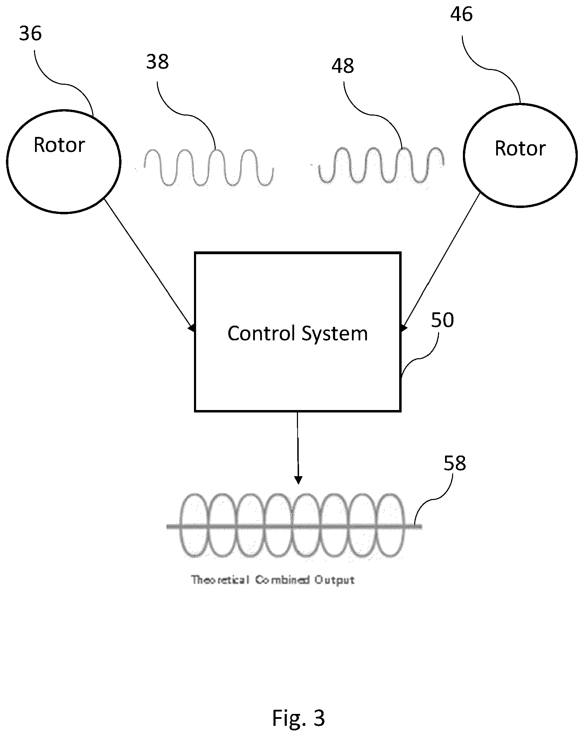

The first 30 and second 40 components are each associated with a respective rotor 36, 46 (shown schematically in Figure 3) which is driven (or actuated) by a corresponding electric motor 32, 42 via a suitable linkage or drivetrain. The rotors with which the first 30 and second 40 components are associated may comprise part of the first or second components (e.g., a fan blade) or may comprise part of the corresponding electric motor 32, 42 (e.g., the motor armature).

The electric vehicle 10 further comprises at least one inverter configured to regulate the flow of electrical power from the power supply (e.g., the battery or the hydrogen fuel cell) to a corresponding motor 32, 42, thereby enabling the speed of said motor to be controlled.

In the illustrated embodiment, a plurality of inverters 34, 44 are provided, with each being configured regulate the flow of electrical power to a respective one of the corresponding electric motors 32, 42. However, it shall be appreciated that in other embodiments, a single inverter may be provided with the remaining "inverter-less" motor being left to operate at a constant speed.

Referring now to Figure 3, during operation, each rotor 36, 46 is associated with a corresponding noise waveform 38, 48 which is generated during operation. In traditional combustion-powered vehicles, the noise waveforms 38, 48 generated by each rotor 36, 46 would be masked by the noise of the combustion engine. However, in electric vehicles, the noise waveforms 38, 48 associated with each rotor 36, 46 cannot be masked in this manner and can therefore be noisy during operation.

The present disclosure addresses this problem by providing a control system 50 which is configured to control the angular position of the first 36 and/or second 46 rotor such that the resultant noise waveform 58 (which is the combined net waveform resulting from the first 38 and second 48 waveforms) is optimised.

The control system is configured to optimise one or more parameters of the noise waveform, such as a maximum amplitude of the resultant waveform; an average amplitude of the resultant waveform; a maximum peak to trough distance; and/or an average peak to trough distance.

In the embodiment illustrated in Figure 3, the control system 50 is configured to control the angular position of the first 36 and/or second 46 rotors such that the noise waveforms associated with the first and second rotors are 180 degrees out of phase. Furthermore, the control system 50 is also configured to control the angular velocity of the first 36 and/or second 46 rotors such that the frequencies of the associated waveforms 38, 48 are substantially equal.

As can be seen in Figure 3, under the above conditions, the first 38 and second 48 noise waveforms are in anti-phase which causes the average and maximum amplitude of the resultant noise waveform 58 to be zero. In other words, the noise generated by one rotor cancels out the noise generated by the other. In this manner, the noise generated by the components of the electric vehicle can be optimised.

However, it shall be appreciated that in some applications, it may not be practical to control the speed of two separate components such that the noise waveforms exhibit the same frequency due to other factors such as operational requirements. As such, optimal noise performance for a given application may be achieved at instances where the resultant noise waveform is not zero.

Furthermore, in vehicles where the number of components is greater than two, optimal noise cancellation performance may be found at different offsets. Typically, optimal noise cancellation performance is achieved when the associated waveforms are $\frac{360}{N}$ degrees out of phase (where N is the number of components).

In some embodiments, the control system 50 can be further configured to modulate an angular velocity of the first 36 and/or second 46 rotors via periodically altering a motor operating target speed supplied to the associated inverter to help prevent the noise waveforms 38, 48 associated with the first 36 and second 46 rotors from resonating during operation.

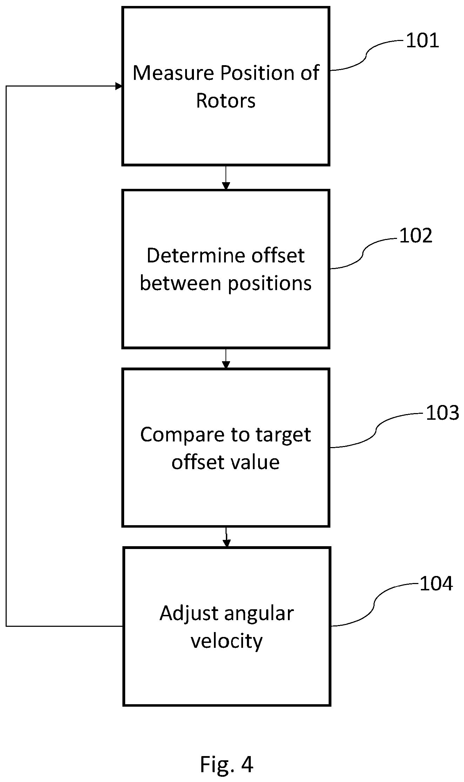

The operation of a control system according to an aspect of the present disclosure shall now be described with reference to Figure 4.

In the embodiment illustrated in Figure 4, the electric vehicle 10 comprises a pair of position sensors (not shown) each configured to measure an angular position of a respective rotor 36, 46.

In the illustrated embodiment, position sensors are provided in the form of motor position sensors, with each sensor being associated with a respective motor 32, 42 of the electric vehicle. The motor position sensors are each configured to determine the angular position of a given rotor based on the position of the electric motor associated with said rotor. This method is often known as "sensorless" operation and is advantageous since it does not require the placement of sensors about the rotors of the electric vehicle. However, it shall be appreciated that in other embodiments, other suitable types of position sensor (e.g., proximity sensors) may be used.

During step 101, the position sensors obtain position data corresponding to the first 36 and second 46 rotors (as shown in Figure 2) and feed this information back to the control system 50.

During step 102, the control system 50 receives the position data provided by the position sensors and uses this data to determine the angular position of each rotor at a given period in time and the relative offset between the angular positions of the rotors 36, 46.

The control system 50 illustrated in Figure 4 assumes that the position of each rotor corresponds to the noise waveform 38, 48 associated with said rotor. For example, when the rotor 36, 46 is at a 12 o'clock (or 0 degree) position, the associated sinusoidal noise waveform 38, 48 is also at an amplitude of zero. When the rotor 36, 46 is at a 3 o'clock (or 90 degree) position, the associated sinusoidal noise waveform 38, 48 reaches a peak or trough. When the rotor 36, 46 is at a 6 o'clock (or 180 degree) position, the associated sinusoidal noise waveform 38, 48 returns to zero and when the rotor 36, 46 is at a 9 o'clock (or 270 degree) position, the associated sinusoidal noise waveform 38, 48 reaches a peak or trough, and so on.

At step 103, the control system compares the offset value determined during step 102 to a target offset value set in advance. Typically, the offset target value is $\frac{360}{N}$ degrees wherein N is the number of components. For example, the offset target value for a two- rotor system would typically be 180 degrees, the offset target value for a three-rotor system would typically be 120 degrees and so on.

If, during step 103, the control system 50 determines that the actual offset of the first 36 and second 46 rotors differs from the offset target value by at least a predetermined amount, a further control step 104 is performed.

At step 104, the control system 50 alters a motor operating target speed supplied to one or more of the associated inverters 34, 44. In turn, the inverter (or inverters) to which the altered motor operating target speed is supplied will alter the amount of electric power supplied to the first and/or second electric motors 32, 42. This will, in turn, enact a change in the motor operating speed of the motor 32, 42 associated with said inverter 34, 44 which will, in turn, increase or decrease the angular velocity of the rotor 36, 46 associated with said motor 32, 42.

In this manner, the relative angular velocities (and hence the relative angular positions) of the first 36 and second 46 rotors can be adjusted to achieve the desired offset. In embodiments where the first 36 and second 46 rotors can be operated at the same frequency, the motor operating target speed supplied to the associated inverters 34, 44 can then be further adjusted to ensure that the first 36 and second 46 rotors are operating at the same frequency once the desire amount of offset has been achieved.

Steps 101 to 104 can also be periodically repeated during operation of the electric vehicle to help ensure that the desired offset between rotors 36, 46 is maintained. In some embodiments the control system 50 may repeat steps 101 to 104 until the offset target value is reached. In other embodiments, steps 101 to 104 may be repeated until the determined offset of the first and second rotors is within the predetermined amount defined above.

Advantageously, the control system 50 described with reference to Figure 4 provides an effective means for optimising noise performance of an electric vehicle when the positions of the respective rotors 36, 46 are known.

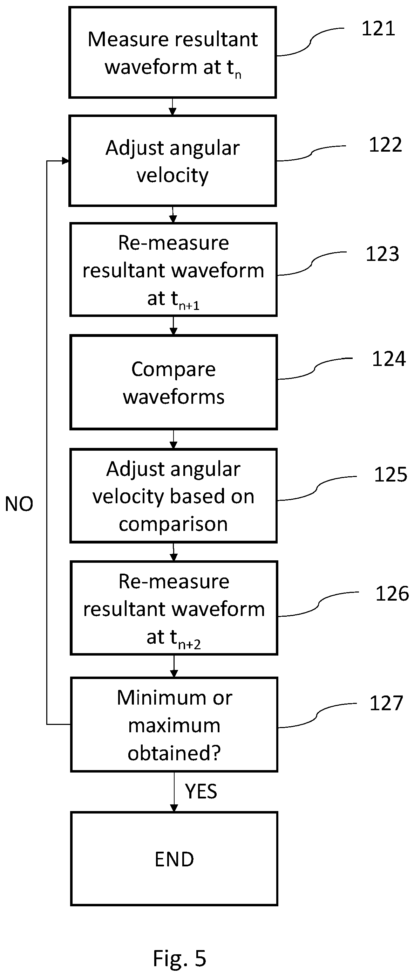

However, in some systems, it may not always be possible to obtain the exact position of each rotor during operation. To this end, the operation of a control system 150 according to another alternative embodiment of the present disclosure shall now be described with reference to Figure 5. Unlike the control system 50 of Figure 4, the control system 150 of Figure 5 can be used even when the exact positions of each rotor are not known.

In the embodiment illustrated in Figure 5, the electric vehicle 10 comprises a transducer 60 which is configured to measure a vibration signature of the electric vehicle 10. As shown in Figure 2, the transducer 60 can be provided as an external microphone or vibration sensor, although it shall be appreciated that any other suitable transducer type may be used.

During step 121, a vibration signature is obtained by the transducer 60 at time tₙ. When this is the first vibration signature obtained, n=1. This signature is then passed to the control system 150. The control system 150 subsequently receives the vibration signature provided by the transducer 60 and uses said signature to determine the resultant waveform 58 of the first 36 and second 46 rotors at time tₙ. In some embodiments, the resultant waveform may be the vibration signature itself. In other embodiments, the vibration signature is processed to obtain the resultant waveform.

At step 122, the control system 150 adjusts the relative angular velocities of the first 36 and second 46 rotors in the same manner as set out above with reference to Figure 4. In other words, the control system 150 alters a motor operating target speed supplied to one or more of the associated inverters 34, 44. In turn, the inverter (or inverters) to which the altered motor operating target speed is supplied will alter the amount of electric power supplied to the first and/or second electric motors 32, 42. This will, in turn, enact a change in the motor operating speed of the motor associated with said inverter 34, 44 which will, in turn, increase or decrease the angular velocity of the rotor 36, 46 associated with said motor 32, 42. In this way, the relative angular positions of the rotors 36, 46 is adjusted.

Once the angular position of at least one of the rotors 36, 46 has been adjusted, the vibration signature is re-measured by the transducer 60 at time tₙ₊₁, where the previous measurement was taken at time tₙ (see step 123). It will be appreciated that n may be any integer number. The vibration signature obtained by the transducer 60 at time tₙ₊₁ is then passed to the control system 150.

The control system 150 subsequently receives the vibration signature provided by the transducer 60 and determines the resultant waveform 58 at time tₙ₊₁.

At step 124, the control system 150 compares the resultant noise waveform obtained at time tₙ to the resultant noise waveform obtained at time tₙ₊₁ to determine whether the parameter has been improved or worsened by the adjustment of the relative rotor positions.

A further adjustment of the relative angular velocities of the first 36 and second 46 rotors is then performed during step 125 based on the results of the comparison performed during step 124, in the same manner as had been described for step 122 above.

For example, if the control system 150 determines at step 124 that a parameter of the resultant noise waveform 58 has been improved by increasing the angular velocity of one of the rotors during step 122, during step 125 the control system 150 may further increase the angular velocity of said rotor in the expectation that such an adjustment will help to further optimise a parameter of the resultant noise waveform 58.

Conversely, if during the comparison performed at step 124 it is determined that increasing the angular velocity of one of the rotors during step 122 has an adverse effect on the desired parameter, the adjustment performed at step 125 may instead decrease the angular velocity of said rotor, e.g., to return the system to its previous state.

In the illustrated embodiment, following step 125 the resultant waveform is re-measured at time tₙ₊₂ (see step 126) and at step 127 it is determined whether a minimum or maximum of the noise parameter has been obtained. If (at step 127) it is determined that a minimum or maximum of the noise parameter has not been obtained, steps 122 to 127 are then repeated to incrementally optimise the noise performance of the electric vehicle 10 (i.e. the measurement at tₙ₊₂ is taken to be tₙ). As such, the control system 150 illustrated in Figure 5 provides an effective iterative feedback loop which enables the noise performance of the electric vehicle to be incrementally optimised without needing to measure the exact positions of each rotor. In the illustrated embodiment, steps 122 to 127 continue to be repeated until a minimum or maximum of the noise parameter is obtained.

In some embodiments, rather that repeating steps 122 to 127 until a minimum or maximum is reached, steps 121 to 125 may instead be periodically repeated at regular intervals. In such embodiments, steps 126 and 127 may be omitted. Furthermore, in some embodiments, steps 121 to 125 may be periodically repeated at regular intervals even after a minimum or maximum of the noise parameter has been obtained at step 127 to help ensure that the desired noise performance is being maintained during operation.

Furthermore, in some embodiments the magnitude of the angular velocity adjustment may be varied based on the number of iterations and/or based on how close the noise parameter is to a maximum or minimum value. For example, the adjustments will typically be smaller in magnitude when the noise parameter is close to a minimum or maximum value.

It shall also be appreciated that the control systems of Figure 4 and Figure 5 may be used in combination to help further improve the effectiveness of the system.

In the illustrated embodiments, the control system is configured to optimise a parameter associated with the resultant waveform with respect to a user located within a cab of the electric vehicle. However, it shall be appreciated that in other embodiments, the control system may alternatively be configured to optimise a parameter associated with the resultant waveform with respect to a bystander, particularly in applications where vehicles are required to meet certain noise emission standards.

Furthermore, whilst the embodiments described above are illustrated as two-rotor systems, it shall be appreciated that in other embodiments, the control system (and associated methods of operation) may be used with electric vehicles having N number of components, wherein N is greater than 2.

Although the invention has been described in relation to one or more embodiments, it will be appreciated that various changes or modifications can be made without departing from the scope of the invention as defined in the appended claims.

## Claims

1. An electric off-highway vehicle (10) comprising:
a power supply;
a hydraulic system and/or a traction system;
a first component (30) associated with a first rotor (36) which, when in use, generates a first noise which is associated with a first noise waveform (38), wherein said hydraulic system and/or said traction system comprises the first component;
a second component (40) associated with a second rotor (46) which, when in use, generates a second noise which is associated with a second noise waveform (48), wherein said hydraulic system and/or said traction system comprises the second component;
a plurality of electric motors (32, 42), each configured to actuate a respective one of the rotors (36, 46); and
a plurality of inverters (34, 44), each being configured to regulate the flow of electrical power from the power supply to a respective one of the electric motors (32, 42),
wherein, when in use, the electric off-highway vehicle (10) is associated with a resultant noise waveform (58) comprising the first (38) and second (48) noise waveforms, and
wherein the electric off-highway vehicle (10) further comprises a control system (50) configured to control the relative angular positions of the first (36) and second (46) rotors via the plurality of inverters (34, 44) such that a desired phase offset is maintained between the noise waveforms (38, 48) associated with the first (36) and second (46) rotors.

2. The electric off-highway vehicle (10) according to claim 1, wherein the control system (50) is configured to control the relative angular positions of the first (36) and second (46) rotors such that the noise waveforms (38, 48) associated with the first (36) and second (46) rotors are 180 degrees out of phase.

3. The electric off-highway vehicle (10) according to claim 1 or 2, wherein the electric off-highway vehicle (10) further comprises at least one position sensor configured to measure the angular positions of the first and second rotors (36, 46), and wherein the control system (50) is configured to determine the relative angular positions of the first and second rotors (36, 46) based on the measurements provided by the at least one position sensor, and optionally wherein the at least one position sensor is a motor position sensor configured to determine the relative angular positions of the first and second rotors (36, 46) based on the angular positions of the plurality of electric motors (32, 42).

4. The electric off-highway vehicle (10) according to any preceding claim, wherein the electric off-highway vehicle (10) is a land vehicle.

5. The electric off-highway vehicle (10) according to any preceding claim, wherein the control system (50) is configured to:
a) determine the angular positions of the first and second rotors (36, 46);
b) determine an offset between the angular positions of the first and second rotors (36, 46); and
c) control the relative angular positions of the first and second rotors (36, 46) based on the determined offset such that the desired phase offset is maintained between the first (38) and second (48) noise waveforms associated with the first (36) and second (46) rotors.

6. The electric off-highway vehicle (10) according to claim 5, wherein the control system (50) is configured to control the relative angular positions of the first and second rotors (36, 46) when the determined offset differs from a target offset value by at least a predetermined amount.

7. The electric off-highway vehicle (10) according to any preceding claim, wherein the control system (50) is configured to:
a) obtain the resultant noise waveform (58) of the electric off-highway vehicle (10) at a time tₙ; and
b) control at least one of the inverters to adjust the relative angular positions of the first and second rotors (36, 46),
c) after step b), obtain an updated resultant noise waveform (58) of the electric off-highway vehicle (10) at a time tₙ₊₁;
d) compare the resultant noise waveform (58) at time tₙ to the resultant noise waveform (58) at time tₙ₊₁; and
e) control at least one of the inverters to further adjust the relative angular positions of the first and second rotors (36, 46) based on the comparison carried out during step d) such that the desired phase offset is maintained between the first (38) and second (48) noise waveforms associated with the first (36) and second (46) rotors.

8. The electric off-highway vehicle (10) of any preceding claim, wherein the first rotor (36) comprises part of the first component (30).

9. The electric off-highway vehicle (10) of any of claims 1 to 7, wherein the first rotor (36) comprises part of the corresponding electric motor (32).

10. The electric off-highway vehicle (10) of any preceding claim, wherein the second rotor (46) comprises part of the second component (40).

11. The electric off-highway vehicle (10) of any of claims 1 to 9, wherein the second rotor (46) comprises part of the corresponding electric motor (42).

## Patentansprüche

1. Elektrisches Off-Highway-Fahrzeug (10), umfassend:
eine Stromversorgung;
ein Hydrauliksystem und/oder ein Traktionssystem;
eine erste Komponente (30), die einem ersten Rotor (36) zugeordnet ist, der bei Verwendung ein erstes Geräusch erzeugt, das einer ersten Geräuschwellenform (38) zugeordnet ist, wobei das Hydrauliksystem und/oder das Traktionssystem die erste Komponente umfasst;
eine zweite Komponente (40), die einem zweiten Rotor (46) zugeordnet ist, der bei Verwendung ein zweites Geräusch erzeugt, das einer zweiten Geräuschwellenform (48) zugeordnet ist, wobei das Hydrauliksystem und/oder das Traktionssystem die zweite Komponente umfasst;
eine Mehrzahl von Elektromotoren (32, 42), von denen jeder dazu ausgebildet ist, einen jeweiligen der Rotoren (36, 46) anzutreiben; und
eine Mehrzahl von Wechselrichtern (34, 44), von denen jeder dazu ausgebildet ist, den Fluss elektrischer Leistung von der Stromversorgung zu einem jeweiligen der Elektromotoren (32, 42) zu regeln,
wobei das elektrische Off-Highway-Fahrzeug (10) bei Verwendung einer resultierenden Geräuschwellenform (58) zugeordnet ist, die die erste (38) und zweite (48) Geräuschwellenform umfasst, und
wobei das elektrische Off-Highway-Fahrzeug (10) weiter ein Steuersystem (50) umfasst, das dazu ausgebildet ist, die relativen Winkelstellungen der ersten (36) und zweiten (46) Rotoren über die Mehrzahl von Wechselrichtern (34, 44) so zu steuern, dass ein gewünschter Phasenversatz zwischen den Geräuschwellenformen (38, 48), die den ersten (36) und zweiten (46) Rotoren zugeordnet sind, aufrechterhalten wird.

2. Elektrisches Off-Highway-Fahrzeug (10) nach Anspruch 1, wobei das Steuersystem (50) dazu ausgebildet ist, die relativen Winkelstellungen der ersten (36) und zweiten (46) Rotoren so zu steuern, dass die Geräuschwellenformen (38, 48), die den ersten (36) und zweiten (46) Rotoren zugeordnet sind, um 180 Grad phasenversetzt sind.

3. Elektrisches Off-Highway-Fahrzeug (10) nach Anspruch 1 oder 2, wobei das elektrische Off-Highway-Fahrzeug (10) weiter mindestens einen Positionssensor umfasst, der dazu ausgebildet ist, die Winkelstellungen der ersten und zweiten Rotoren (36, 46) zu messen, und wobei das Steuersystem (50) dazu ausgebildet ist, die relativen Winkelstellungen der ersten und zweiten Rotoren (36, 46) auf der Grundlage der durch den mindestens einen Positionssensor bereitgestellten Messungen zu bestimmen, und wahlweise wobei der mindestens eine Positionssensor ein Motorpositionssensor ist, der dazu ausgebildet ist, die relativen Winkelstellungen der ersten und zweiten Rotoren (36, 46) auf der Grundlage der Winkelstellungen der Mehrzahl von Elektromotoren (32, 42) zu bestimmen.

4. Elektrisches Off-Highway-Fahrzeug (10) nach einem vorstehenden Anspruch, wobei das elektrische Off-Highway-Fahrzeug (10) ein Landfahrzeug ist.

5. Elektrisches Off-Highway-Fahrzeug (10) nach einem vorstehenden Anspruch, wobei das Steuersystem (50) ausgebildet ist, zum:
a) Bestimmen der Winkelstellungen der ersten und zweiten Rotoren (36, 46);
b) Bestimmen eines Versatzes zwischen den Winkelstellungen der ersten und zweiten Rotoren (36, 46); und
c) Steuern der relativen Winkelstellungen der ersten und zweiten Rotoren (36, 46) auf der Grundlage von dem bestimmten Versatz, sodass der gewünschte Phasenversatz zwischen den ersten (38) und zweiten (48) Geräuschwellenformen, die den ersten (36) und zweiten (46) Rotoren zugeordnet sind, aufrechterhalten wird.

6. Elektrisches Off-Highway-Fahrzeug (10) nach Anspruch 5, wobei das Steuersystem (50) dazu ausgebildet ist, die relativen Winkelstellungen der ersten und zweiten Rotoren (36, 46) zu steuern, wenn der bestimmte Versatz von einem Soll-Versatzwert um mindestens einen vorbestimmten Betrag abweicht.

7. Elektrisches Off-Highway-Fahrzeug (10) nach einem vorstehenden Anspruch, wobei das Steuersystem (50) ausgebildet ist, zu Folgendem:
a) Erhalten der resultierenden Geräuschwellenform (58) des elektrischen Off-Highway-Fahrzeugs (10) zu einem Zeitpunkt tₙ; und
b) Steuern mindestens eines der Wechselrichter, um die relativen Winkelstellungen der ersten und zweiten Rotoren (36, 46) einzustellen,
c) nach Schritt b), Erhalten einer aktualisierten resultierenden Geräuschwellenform (58) des elektrischen Off-Highway-Fahrzeugs (10) zu einem Zeitpunkt tₙ₊₁;
d) Vergleichen der resultierenden Geräuschwellenform (58) zum Zeitpunkt tₙ mit der resultierenden Geräuschwellenform (58) zum Zeitpunkt tₙ₊₁; und
e) Steuern mindestens eines der Wechselrichter, um die relativen Winkelstellungen der ersten und zweiten Rotoren (36, 46) weiter auf der Grundlage von dem während Schritt d) durchgeführten Vergleich einzustellen, sodass der gewünschte Phasenversatz zwischen den ersten (38) und zweiten (48) Geräuschwellenformen, die den ersten (36) und zweiten (46) Rotoren zugeordnet sind, aufrechterhalten wird.

8. Elektrisches Off-Highway-Fahrzeug (10) nach einem vorstehenden Anspruch, wobei der erste Rotor (36) einen Teil der ersten Komponente (30) umfasst.

9. Elektrisches Off-Highway-Fahrzeug (10) nach einem der Ansprüche 1 bis 7, wobei der erste Rotor (36) einen Teil des entsprechenden Elektromotors (32) umfasst.

10. Elektrisches Off-Highway-Fahrzeug (10) nach einem vorstehenden Anspruch, wobei der zweite Rotor (46) einen Teil der zweiten Komponente (40) umfasst.

11. Elektrisches Off-Highway-Fahrzeug (10) nach einem der Ansprüche 1 bis 9, wobei der zweite Rotor (46) einen Teil des entsprechenden Elektromotors (42) umfasst.

## Revendications

1. Véhicule électrique (10) tout terrain comprenant :
une alimentation électrique ;
un système hydraulique et/ou un système de traction ;
un premier composant (30) associé à un premier rotor (36) qui, lorsqu'il est en utilisation, génère un premier bruit qui est associé à une première forme d'onde (38) de bruit, dans lequel ledit système hydraulique et/ou ledit système de traction comprennent le premier composant ;
un deuxième composant (40) associé à un deuxième rotor (46) qui, lorsqu'il est en utilisation, génère un deuxième bruit qui est associé à une deuxième forme d'onde (48) de bruit, dans lequel ledit système hydraulique et/ou ledit système de traction comprennent le deuxième composant ;
une pluralité de moteurs électriques (32, 42), chacun étant configuré pour actionner un rotor respectif parmi les rotors (36, 46) ; et
une pluralité d'onduleurs (34, 44), chacun étant configuré pour réguler le flux de puissance électrique depuis l'alimentation électrique vers un moteur électrique respectif parmi les moteurs électriques (32, 42),
dans lequel, lorsqu'il est en utilisation, le véhicule électrique (10) tout terrain est associé à une forme d'onde (58) de bruit résultante comprenant les première (38) et deuxième (48) formes d'onde de bruit, et
dans lequel le véhicule électrique (10) tout terrain comprend en outre un système de commande (50) configuré pour commander les positions angulaires relatives des premier (36) et deuxième (46) rotors via la pluralité d'onduleurs (34, 44) de telle sorte qu'un décalage de phase souhaité est maintenu entre les formes d'onde (38, 48) de bruit associées aux premier (36) et deuxième (46) rotors.

2. Véhicule électrique (10) tout terrain selon la revendication 1, dans lequel le système de commande (50) est configuré pour commander les positions angulaires relatives des premier (36) et deuxième (46) rotors de telle sorte que les formes d'onde (38, 48) de bruit associées aux premier (36) et deuxième (46) rotors sont déphasées de 180 degrés.

3. Véhicule électrique (10) tout terrain selon la revendication 1 ou la revendication 2, dans lequel le véhicule électrique (10) tout terrain comprend en outre au moins un capteur de position configuré pour mesurer les positions angulaires des premier et deuxième rotors (36, 46), et dans lequel le système de commande (50) est configuré pour déterminer les positions angulaires relatives des premier et deuxième rotors (36, 46) sur la base des mesures fournies par ledit au moins un capteur de position, et facultativement dans lequel ledit au moins un capteur de position est un capteur de position de moteur configuré pour déterminer les positions angulaires relatives des premier et deuxième rotors (36, 46) sur la base des positions angulaires de la pluralité de moteurs électriques (32, 42).

4. Véhicule électrique (10) tout terrain selon une quelconque revendication précédente, dans lequel le véhicule électrique (10) tout terrain est un véhicule terrestre.

5. Véhicule électrique (10) tout terrain selon une quelconque revendication précédente, dans lequel le système de commande (50) est configuré pour :
a) déterminer les positions angulaires des premier et deuxième rotors (36, 46) ;
b) déterminer un décalage entre les positions angulaires des premier et deuxième rotors (36, 46) ; et
c) commander les positions angulaires relatives des premier et deuxième rotors (36, 46) sur la base du décalage déterminé de telle sorte que le décalage de phase souhaité est maintenu entre les première (38) et deuxième (48) formes d'onde de bruit associées aux premier (36) et deuxième (46) rotors.

6. Véhicule électrique (10) tout terrain selon la revendication 5, dans lequel le système de commande (50) est configuré pour commander les positions angulaires relatives des premier et deuxième rotors (36, 46) lorsque le décalage déterminé diffère d'une valeur cible de décalage d'au moins une quantité prédéterminée.

7. Véhicule électrique (10) tout terrain selon une quelconque revendication précédente, dans lequel le système de commande (50) est configuré pour :
a) obtenir la forme d'onde (58) de bruit résultante du véhicule électrique (10) tout terrain à un instant tₙ ; et
b) commander au moins un des onduleurs pour ajuster les positions angulaires relatives des premier et deuxième rotors (36, 46),
c) après l'étape b), obtenir une forme d'onde (58) de bruit résultante mise à jour du véhicule électrique (10) tout terrain à un instant tₙ₊₁ ;
d) comparer la forme d'onde (58) de bruit résultante à l'instant tₙ à la forme d'onde (58) de bruit résultante à l'instant tₙ₊₁ ; et
e) commander au moins un des onduleurs pour ajuster en outre les positions angulaires relatives des premier et deuxième rotors (36, 46) sur la base de la comparaison mise en œuvre pendant l'étape d) de telle sorte que le décalage de phase souhaité est maintenu entre les première (38) et deuxième (48) formes d'onde de bruit associées aux premier (36) et deuxième (46) rotors.

8. Véhicule électrique (10) tout terrain selon une quelconque revendication précédente, dans lequel le premier rotor (36) comprend une partie du premier composant (30).

9. Véhicule électrique (10) tout terrain selon l'une quelconque des revendications 1 à 7, dans lequel le premier rotor (36) comprend une partie du moteur électrique (32) correspondant.

10. Véhicule électrique (10) tout terrain selon une quelconque revendication précédente, dans lequel le deuxième rotor (46) comprend une partie du deuxième composant (40).

11. Véhicule électrique (10) tout terrain selon l'une quelconque des revendications 1 à 9, dans lequel le deuxième rotor (46) comprend une partie du moteur électrique (42) correspondant.
